(19) **Europäisches Patentamt European Patent Office Office européen des brevets**

(11) **EP 4 441 164 B1**

(12) **FASCICULE DE BREVET EUROPEEN**

(45) Date de publication et mention de la délivrance du brevet:
**01.07.2026 Bulletin 2026/27**

(21) Numéro de dépôt: **22835461.9**

(22) Date de dépôt: **01.12.2022**

(51) Classification Internationale des Brevets (IPC):
**C09K 8/54** *(2006.01)* **C09K 8/584** *(2006.01)*
**C11D 1/90** *(2006.01)* **C11D 1/92** *(2006.01)*
**C11D 1/94** *(2006.01)* **C11D 3/34** *(2006.01)*
**C11D 3/00** *(2006.01)*

(52) Classification Coopérative des Brevets (CPC):
**C11D 1/88; C09K 8/54; C09K 8/584; C09K 8/594;
C10M 175/0016; C11D 1/94; C11D 3/0073;
C11D 3/0094; C11D 3/34;** C09K 2208/20;
C09K 2208/22; C09K 2208/32; C10M 2207/021;
C10M 2207/022; C10M 2207/04; (Cont.)

(86) Numéro de dépôt international:
**PCT/FR2022/052213**

(87) Numéro de publication internationale:
**WO 2023/099848 (08.06.2023 Gazette 2023/23)**

(54) **COMPOSITION MOUSSANTE COMPATIBLE AVEC L'ACIER POUR LA RÉCUPÉRATION ASSISTÉE D'HYDROCARBURES**

MIT STAHL KOMPATIBLE SCHÄUMENDE ZUSAMMENSETZUNG ZUR UNTERSTÜTZTEN RÜCKGEWINNUNG VON KOHLENWASSERSTOFFEN

FOAMING COMPOSITION COMPATIBLE WITH STEEL FOR THE ASSISTED RECOVERY OF HYDROCARBONS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **02.12.2021 FR 2112832**

(43) Date de publication de la demande:
**09.10.2024 Bulletin 2024/41**

(73) Titulaire: **ARKEMA FRANCE
92800 Puteaux (FR)**

(72) Inventeurs:
• **DELROISSE, Henry
69491 PIERRE-BENITE Cedex (FR)**
• **MEKARBANE, Pierre
69491 PIERRE-BENITE Cedex (FR)**

(56) Documents cités:
**CN-A- 108 822 823      CN-A- 110 878 201
CN-A- 111 057 530      US-A1- 2006 019 846
US-A1- 2012 285 694    US-A1- 2015 322 757
US-A1- 2019 010 381    US-A1- 2021 340 427
US-B2- 11 168 244**

**(Cont. page suivante)**

(52) Classification Coopérative des Brevets (CPC):
(Cont.)C10M 2207/08; C10M 2207/34;
C10M 2209/107; C10M 2209/12; C10M 2215/042;
C10M 2215/08; C10M 2215/224; C10M 2219/044;
C10M 2219/08; C10M 2219/085; C10M 2219/086;
C10M 2223/06; C10N 2030/12; C11D 1/90;
C11D 1/92

(52) Classification Coopérative des Brevets (CPC):
(Cont.)C10M 2207/08; C10M 2207/34;

**Description**

La présente invention concerne le domaine de la récupération assistée d'hydrocarbures, notamment de pétrole et de gaz, et concerne plus particulièrement les additifs moussants utilisés pour la récupération assistée d'hydrocarbures.

Les compositions moussantes pour la récupération assistée des hydrocarbures, principalement pétrole et gaz, sont aujourd'hui couramment utilisées par injection dans les puits de production. En effet, la baisse de pression du réservoir d'hydrocarbures au cours du temps implique une diminution des débits des fluides produits, tels que eau, hydrocarbures liquides et gaz. Il peut en résulter un mauvais entraînement des fluides les plus denses dans les puits qu'ils soient verticaux ou non et ainsi une accumulation desdits fluides les plus denses. Cette accumulation conduit à son tour à une augmentation de la pression de colonne hydrostatique ce qui tend à réduire la production. L'ajout de composition moussante, par exemple via l'installation de système d'extraction par injection de gaz (« gas lift » en langue anglaise), permet d'entraîner les fluides, de réduire la pression de la colonne et ainsi d'augmenter la production.

Cependant, certaines compositions moussantes peuvent être incompatibles avec les divers matériaux métalliques des puits, conduites, lignes d'injection et autres, dans lesquels elles sont injectées. Cette incompatibilité est d'autant plus fréquente que le métal est de l'acier non allié. Cette incompatibilité se traduit notamment par un risque de corrosion de l'acier, corrosion qui doit être évitée autant que possible.

Les problèmes de corrosion sont en effet fréquents, que ce soit en raison de corrosion généralisée et/ou de corrosion caverneuse (également dénommée « corrosion par crevasse » ou « corrosion sous joint »). Ces phénomènes de corrosion impactent notamment les installations en acier, plus spécifiquement aciers non alliés, et le plus souvent là où les produits sont concentrés. Des points de corrosion apparaissent ainsi souvent dans les stockages, dans les lignes d'injections, aux points d'injections, ou autres.

La littérature fournit de nombreux exemples de compositions moussantes pour récupération assistée d'hydrocarbures, comme par exemple les brevets US7422064 ou US7823647. Toutefois ces documents ne traitent pas des problèmes de corrosion, notamment dans les stockages et les lignes d'injection, problèmes de corrosion qui sont souvent liés à l'emploi de telles compositions moussantes.

Le document US8551925 divulgue des agents moussants comprenant des dérivés d'imidazoline et plus particulièrement des formulations comprenant une imidazoline avec une bétaïne, un alcool et de l'eau. Ces formulations sont également indiquées comme ayant des propriétés anti-corrosives, cependant, la corrosion caverneuse (ou sous joint) n'est pas mentionnée. Seuls des problèmes de corrosion généralisée une fois le produit injecté dans les lignes de production sont envisagés.

Le brevet EP3103852 divulgue également une composition moussante et non-corrosive, sans toutefois évoquer les problèmes de corrosion caverneuse. Les documents CN111057530 et CN110878201 décrivent agents de nettoyages moussants résistants aux conditions salines et aux hautes températueres et destinés à être utilisés dans le domaine de l'extraction des hydrocarbures. Ces agents comprennent des sulfobétaïnes des nano-particules organiques, des sels minéraux et des stabilisants qui peuvent être des benzimidazoles ou des dithiocarbamates. La demande de brevet US20150322757 divulgue un procédé de vidange d'un réservoir consistant à introduire deux tensio-actifs amphotères, lesquels peuvent contenir divers additifs dont des inhibiteurs de corrosion, comprenant éventuellement des molécules soufrées présentées comme agents synergiques desdts inhibiteurs de corrosion. Les documents US11168244 et US2019010381 décrivent des compositions et des procédés permettant d'augmenter la récupération, ou le reflux, de composés hydrocarbonés à partir de réservoirs souterrains contenant des hydrocarbures. Les compositions comprennent un tensioactif dialkyl diméthyl ammonium, un tensioactif amphotère et un solvant, ainsi que éventuellement un ou plusieurs additifs parmi lesquels des inhibiteurs de corrosion.

Il reste cependant un besoin pour des compositions moussantes qui soient efficaces d'une part pour lutter contre la corrosion généralisée, mais aussi contre la corrosion par crevasse des aciers, et en particulier des aciers non alliés.

Plus spécifiquement, il reste un besoin pour des compositions moussantes et non corrosives et en particulier pour des aciers non alliés.

D'autres objectifs encore apparaîtront dans la suite du présent exposé. Les inventeurs ont maintenant découvert que les objectifs précités sont résolus en totalité ou au moins en partie grâce à la présente invention dont la description suit.

Ainsi, et selon un premier aspect, la présente invention concerne une composition moussante, inhibitrice de corrosion, comprenant :

a) une composition tensio-active comprenant au moins un composé tensio-actif amphotère et éventuellement un ou plusieurs composés tensioactifs additionnels choisis parmi les composés tensioactifs ioniques et non-ioniques, et
b) au moins une molécule soufrée choisie parmi :

- l'acide thioglycolique, le thioglycolate de sodium, le thiosulfate de sodium, le thiocyanate de sodium, l'acide mercaptopropionique, le tert-butylmercaptan, le thioglycolate d'éthylhexyle, les disulfures d'acide thioglycolique, l'acide 3-mercaptopropionique et ses sels, le 1,8-dimercapto-3,6-di-oxa-octane, le bis-(2-mercaptoéthyl)éther, les mercaptobenzothiazolates, le sel de sodium de l'acide 2-[(dithiocarboxy)thio]-acétique, le thiosulfite d'ammonium, le thiosulfate d'ammonium, le thiosulfate de potassium, le thiosulfite de potassium, le thiocyanate d'ammonium, le thiocyanate de calcium, le thioglycolate d'ammonium, la 1,2-diéthylthio-urée, la propylthio-urée, la 1,1-diphénylthio-urée, le thiocarbanilide, la 1,2-dibutylthio-urée, le thioacétamide de dithio-urée, le thionicotimide, le thiobenzamide, le 2-mercapto-éthanol, le 3-(méthylthio)propanal, l'acide thioacétique, la cystéamine, le 3-chloro-1-propanethiol, le 1-mercapto-2-propanol, le 2-méthoxyéthane-thiol, le 3-mercapto-1-propanol, le 2,3-dimercapto-1-propanol, le 1-thioglycérol, le 1,3-propane-dithiol, l'acide mercaptosuccinique, la N-carbamoyl-L-cystéine, la N-acétylcystéamine, le 4-mercapto-1-butanol, le 1-butanedithiol, le 1,4-butanedithiol, le 2,2'-thiodiéthanethiol, le 4-cyano-1-butanethiol, le cyclopentanethiol, le 1,5-pentanedithiol, le 2-méthyl-1-butanethiol, le 2,3,5,6-tétrafluorobenzènethiophénol, le 4-chlorothiophénol, le 2-mercaptophénol, le thiophénol, le cyclohexylthiol, l'acide 4-mercaptobenzoïque, l'acide thiosalicylique, le 2-éthylhexanethiol, les composés de formule $C_nH_{2n+1}$ SH, avec n compris entre 1 et 10, bornes incluses,

- ainsi que les mélanges de deux ou plusieurs desdites molécules soufrées, en toutes proportions.

Dans le contexte de la présente invention, une composition moussante est une composition comprenant au moins un agent tensio-actif dont la valeur de tension de surface est suffisamment faible pour produire une mousse. Cette « mousse » permet notamment la réduction de la densité du fluide de production et la réduction de la pression hydrostatique de la colonne de fluide dans le puit de production d'hydrocarbures. Ainsi, la présence de composition moussante permet généralement d'observer une augmentation potentielle de la production des puits.

Par « composé tensio-actif amphotère », on entend un composé tensio-actif pouvant avoir un rôle tantôt acide, tantôt basique, selon la définition classique utilisée dans le domaine de la chimie. Un composé tensio-actif amphotère tout particulièrement adapté à la présente invention est un zwitterion. Un zwitterion particulièrement préféré est choisi parmi les bétaïnes et les sultaïnes. Un groupe préféré de bétaïnes et de sultaïnes tout particulièrement adapté pour les besoins de l'invention, comprend, à titre d'exemple non limitatif, les alkylbétaïnes, les alkylarylbétaïnes, les arylalkylbétaïnes, les alkylamidopropylbétaïnes, les alkylarylamidopropylbétaïnes, les arylalkylamidopropylbétaïnes, les alkylaminopropylbétaïnes, les alkylarylaminopropylbétaïnes, les arylalkylaminopropylbétaïnes, les alkylsultaïnes, les alkylarylsultaïnes, les arylalkylsultaïnes, les alkylamidopropylhydroxysultaïnes, ainsi que les mélanges de deux ou plusieurs d'entre elles en toutes proportions.

Comme autre composé tensio-actif amphotère pouvant entrer dans la composition de la présente invention, en addition ou en substitution des zwitterions cités plus haut, on peut citer, à titre d'exemples non limitatifs les alkylamphoacétates, les alkylamphodiacétates, les alkylamphopropionates, ainsi que les mélanges de deux ou plusieurs d'entre eux en toutes proportions.

Le ou les tensioactifs additionnels pouvant être présent(s) dans la composition a) sont choisis parmi les tensioactifs ioniques (c'est-à-dire cationique(s) ou anionique(s)), et les tensioactifs non-ionique(s). Parmi les tensio-actifs additionnels préférés, on peut citer à titre d'exemples non limitatifs les alkyl(aryl)(éther)sulfates, les alkyl(aryl) sulfonates, les alkyl(aryl)ester phosphates, les alkyl(aryl)carboxylates, les alkylsulfosuccinates, les sels d'ammonium quaternaires, les oxydes d'alkylamines, les éthoxylats d'alkylamines, les éthoxylats d'alkylamides, les éthoxylats d'acides gras, les éthoxylats d'alcools gras, les alkyléthercarboxylates, les carboxylates d'alkylamides, les alkyl(poly)glucosides, les esters d'alkylsorbitan, les copolymères à blocs éthylèneoxy-propylèneoxy (EO-PO), les alkylisothionates, les alkylglycinates, les alkylsarcosinates, les alkylsulfosuccinates, les alkylglutamates, les alkyllactilates, les alkyltaurates, les alkylsulfoacétates, ainsi que les mélanges de deux ou plusieurs d'entre eux en toutes proportions.

La composition moussante selon l'invention comprend au moins une molécule soufrée choisie parmi : l'acide thioglycolique, le thioglycolate de sodium, le thiosulfate de sodium, le thiocyanate de sodium, l'acide mercaptopropionique, le tert-butylmercaptan, le thioglycolate d'éthylhexyle, les disulfures d'acide thioglycolique l'acide 3-mercaptopropionique (AMP) et ses sels, le 1,8-dimercapto-3,6-di-oxa-octane (DMDO), le bis-(2-mercaptoéthyl)éther, les mercaptobenzothiazolates, le sel de sodium de l'acide 2-[(dithiocarboxy)thio]-acétique (D8) (CAS no. 86932-91-4), le thiosulfite d'ammonium, le thiosulfate d'ammonium, le thiosulfate de potassium, le thiosulfite de potassium, le thiocyanate d'ammonium, le thiocyanate de calcium, le thioglycolate d'ammonium, la 1,2-diéthylthio-urée, la propylthio-urée, la 1,1-diphénylthio-urée, le thiocarbanilide, la 1,2-dibutylthio-urée, le thioacétamide de dithio-urée, le thionicotimide, le thiobenzamide, le 2-mercaptoéthanol, le 3-(méthylthio)propanal, l'acide thioacétique, la cystéamine, le 3-chloro-1-propanethiol, le 1-mercapto-2-propanol, le 2-méthoxyéthane-thiol, le 3-mercapto-1-propanol, le 2,3-dimercapto-1-propanol, le 1-thioglycérol, le 1,3-propane-dithiol, l'acide mercaptosuccinique, la N-carbamoyl-L-cystéine, la N-acétylcystéamine, le 4-mercapto-1-butanol, le 1-butanedithiol, le 1,4-butanedithiol, le 2,2'-thiodiéthanethiol, le 4-cyano-1-butanethiol, le cyclopentanethiol, le 1,5-pentanedithiol, le 2-méthyl-1-butanethiol, le 2,3,5,6-tétrafluorobenzènethiophénol, le 4-chlorothiophénol, le 2-mercaptophénol, le thiophénol, le cyclohexylthiol, l'acide 4-mercaptobenzoïque, l'acide thiosalicylique, le 2-éthylhexanethiol, les composés de formule $C_nH_{2n+1}$SH, avec n compris entre 1 et 10, bornes incluses, ainsi que les mélanges de deux ou plusieurs d'entre elles en toutes proportions.

La molécule soufrée est de préférence présente dans la composition selon la présente invention à une dose comprise entre 0,001% et 2%, de préférence 0,005% et 1%, de préférence encore 0,005% à 0,1%, et avantageusement 0,005% et 0,01%, bornes incluses, les pourcentages étant exprimés en poids, par rapport au poids total de la composition.

Selon un aspect préféré, la composition de l'invention comprend en outre au moins un solvant, de préférence un solvant polaire, ou un solvant non polaire ou une combinaison de ceux-ci. Des exemples de solvants particulièrement adaptés aux besoins de l'invention comprennent :

- l'eau, y compris l'eau salée, l'eau de mer,
- les alcools, incluant les alcools de formule R-OH, où R est tel que défini précédemment, et tels que le méthanol, l'éthanol, le propanol, l'isopropanol, le butanol, le 2-éthoxyéthanol, l'hexanol, l'octanol, le 2-butoxyéthanol,
- les glycols, les éthers de glycol et leurs dérivés, tels que l'éthylèneglycol, le diéthylèneglycol, le triéthylèneglycol, le 1,2-propylèneglycol, le 1,3-propylèneglycol, l'éthylèneglycol-monobutyléther, et autres,
- les cétones, telles que la cyclohexanone, les di-isobutylcétones, la N-méthylpyrrolidinone, le N,N-diméthylformamide, et autres,

ainsi que le mélange de deux ou plusieurs d'entre eux en toutes proportions.

De préférence, le ou les solvants sont choisis parmi les solvants miscibles à l'eau (y compris l'eau salée et l'eau de mer), comme par exemple les glycols, les éthers de glycol, le méthanol, l'éthanol, le propanol, le 2-méthoxyéthanol, le 2-éthoxyéthanol, le 2-butoxyéthanol, pour ne citer que les principaux d'entre eux, de manière non limitative.

Outre la présence d'éventuels solvants, notamment tels que eau et/ou solvant(s) organique(s) comme indiqué ci-dessus, la composition selon la présente invention peut également comprendre un ou plusieurs autres additifs couramment utilisés dans le domaine de la récupération assistée d'hydrocarbures.

Parmi ces additifs on peut par exemple citer :

- les modificateurs de pH,
- les anti-dépôts minéraux,
- les inhibiteurs de corrosions,
- les inhibiteurs de sulfure d'hydrogène,
- les pièges à oxygène (« oxygen scavengers » en langue anglaise),
- les désémulsionnants,
- les anti-asphaltènes,
- les anti-paraffines,
- les déshuilants,
- les « réducteurs de point d'écoulement » (ou « pour-point depressants » en langue anglaise),
- les biocides,
- les anti-agglomérants d'hydrates de gaz,
- les inhibiteurs thermodynamiques d'hydrates de gaz,
- les inhibiteurs cinétiques d'hydrates de gaz,
- ainsi que les mélanges de deux ou plusieurs de ces additifs en toutes proportions.

Les modificateurs de pH peuvent par exemple être des hydroxydes de métaux alcalins, des carbonates de métaux alcalins, des bicarbonates de métaux alcalins, des hydroxydes de métaux alcalino-terreux, des carbonates de métaux alcalino-terreux, des bicarbonates de métaux alcalino-terreux, ainsi que leurs ménages et combinaisons de deux ou plusieurs d'entre eux. De préférence des exemples de modificateurs de pH comprennent hydroxyde de sodium, hydroxyde de potassium, hydroxyde de calcium, oxyde de calcium, carbonate de sodium, carbonate de potassium, bicarbonate de sodium, bicarbonate de potassium, oxyde de magnésium, et hydroxyde de magnésium. Selon un aspect de l'invention, les exemples de modificateurs de pH sont des composés basiques utilisés pour augmenter le pH de la composition, et sont par exemple des bases minérales ou organiques, telles que hydroxyde de sodium, hydroxyde de potassium, amines neutralisantes, et autres.

Parmi les anti-dépôts minéraux utiles dans le cadre de la présente invention, on peut citer, à titre d'exemples non limitatifs, les phosphates, les phosphate esters, les acides phosphoriques, les phosphonates, les acides phosphoniques, les polyacrylamides, les copolymères acrylamidométhylpropanesulfonates/acide acrylique (AMPS/AA), les copolymères phosphinates/acide maléique (PHOS/MA), les sulfonates de terpolymères acide polymaléique/acide acrylique/acrylamidométhylpropanesulfonate (PMA/AA/AMPS).

Les agents anti-corrosion qui peuvent être utilisés dans le cadre de la présente invention, sont par exemple ceux décrits dans l'ouvrage « Production Chemicals for the Oil and Gas Industry », Malcolm A. Kelland, CRC Press, 2e édition, (2014), 194-212. Plus spécifiquement, des exemples non limitatifs d'agents anti-corrosion comprennent les esters phosphoriques, les composés organo-azotés, des molécules soufrées comportant généralement un ou plusieurs hétéroatomes tels que azote et oxygène, les sels carboxyliques d'amines, les ammoniums quaternaires, les amidoamines et imidazolines, les amines et amidoamines ethoxylées et/ou propoxylées, les amides, les composés hétérocycliques porteurs d'un atome d'azote chargé (tels que les pyrimidinium, pyridinium, quinolinium, pipérazinium), les sels ioniques des espèces cationiques et anioniques citées dans ce paragraphe, les esters amines polymériques, les esters amines polymériques quaternisés, et les combinaisons de toutes ces molécules.

Des exemples non limitatifs d'inhibiteurs de sulfure d'hydrogène comprennent les oxydants (par exemple des peroxydes minéraux, tels que le peroxyde de sodium ou le dioxyde de chlore), des aldéhydes (par exemple comprenant de 1 à 10 atomes de carbone tels que le formaldéhyde, le glyoxal, le glutaraldéhyde, l'acroléine, la méthacroléine), les triazines (par exemple la monoéthanolamine triazine, la monométhylamine triazine, et les triazines de plusieurs amines ainsi que leurs mélanges), les produits de condensation d'amines secondaires ou tertiaires avec des aldéhydes, et les produits de condensation d'alcools alkyliques avec des aldéhydes.

Les pièges à oxygène qui peuvent être utilisés dans le cadre de la présente invention, sont par exemple ceux décrits dans l'ouvrage « Production Chemicals for the Oil and Gas Industry », Malcolm A. Kelland, CRC Press, 2e édition, (2014), 369-373. Plus spécifiquement, des exemples non limitatifs de pièges à oxygène utilisables dans le cadre de la présente invention comprennent, à titre d'exemples non limitatifs, les bisulfites, les métabisulfites, les sels de sulfites, des sels de dithionite, l'hydrazine, la 1-aminopyrrolidine, les guanidines, les carbonydrazides et semicarbazide, les hydroxylamines, les oximes, les aldéhydes activés, les composés polyhydroxyles.

Les désémulsionnants qui peuvent être utilisés dans le cadre de la présente invention, sont par exemple ceux décrits dans l'ouvrage « Production Chemicals for the Oil and Gas Industry », Malcolm A. Kelland, CRC Press, 2e édition, (2014), 291-301. Plus spécifiquement, on peut citer, à titre d'exemples non limitatifs, l'acide dodécylbenzylsulfonique (DDBSA), le sel de sodium de l'acide xylènesulfonique (NAXSA), les composés éthoxylés et propoxylés, les co- et ter-polymères blocks polyalcoxylés, les polyols de polyalcoxylates ou d'éthers diglycidyliques, les polyamines polyalcoxylés et polymères cationiques apparentés, les polyuréthanes (carbamates) et dérivés polyalcoxylés, les polymères hyperbranchés, les polymères de vinyle, les polysilicones, et des résines, telles que les résines phénoliques et les résines époxy, et les désémulsionnants comprenant un polyoxyalkylate, tel que le polyalkylène glycol, ou encore les résines formol-cardanol.

À titre d'exemples non limitatifs d'anti-asphaltènes, on peut citer les acides sulfoniques aliphatiques, les acides alkylarylsulfoniques, les arylsulfonates, les lignosulfonates, les résines alkylphénol/aldehyde et autres résines sulfonées similaires, les esters de polyoléfines, les imides de polyoléfines, les esters de polyoléfines à groupements fonctionnels alkyle, alkylènephényle ou alkylènepyridyle, les amides de polyoléfines, les amides de polyoléfines à groupements fonctionnels alkyle, alkylènephényle ou alkylènepyridyle, les copolymères alkényl/vinylpyrrolidone, les polymères greffés de polyoléfines avec de anhydride maléique ou vinylimidazole, les polyesteramides hyperbranchées les asphaltènes polyalcoxylés, les acides gras amphotères, les sels d'alkylsuccinates, du monooléate de sorbitan, et l'anhydride et polyisobutylène succinique.

Des agents anti-paraffines tout à fait adaptés comprennent les modificateurs de cristaux de paraffines, et les combinaisons de dispersants et de modificateurs de cristaux, et à titre d'exemples non limitatifs, en tant que modificateurs de cristaux, les copolymères alkylacrylate, les copolymères alkylacrylate/vinylpyridine, les copolymères éthylène/-vinylacétate, les copolymères d'ester d'anhydride maléique, des polyéthylènes branchés, les naphtalènes, les anthracènes, les cires microcristallines, et les asphaltènes, et en tant que dispersants de paraffines, le dodécylbenzène sulfonate, les alkylphénols oxyalkylés, et les résines alkylphénoliques oxyalkylées.

À titre d'exemples non limitatifs de déshuilants, on peut citer les sels organiques de métaux, tels que les aluns, le chlorure d'aluminium, et le chlorhydrate d'aluminium, les polymères organiques tels que les polymères à base d'acide acrylique, les polymères à base acrylamide, les amines polymérisées, les alcanolamines, les thiocarbamates, et les polymères cationiques, tels que le chlorure de diallyldiméthylammonium (DADMAC).

Les réducteurs de point d'écoulement (ou « pour-point depressants ») qui peuvent être utilisés dans le cadre de la présente invention, sont par exemple ceux décrits dans l'ouvrage « Production Chemicals for the Oil and Gas Industry », Malcolm A. Kelland, CRC Press, 2e édition, (2014), 267-278. Parmi ceux-ci on peut citer, à titres d'exemples non limitatifs, les éthylène/vinylacétate (EVA) copolymères, les polyacrylates, les poly alpha-oléfines, les éthylènes/acrylonitrile copolymères, les éthylènes/alcènes copolymères, les polymères d'esters acryliques ou méthacryliques, les polymères d'anhydride maléïque, les copolymères anhydride maléique avec co-monomères vinyle, et autres et leurs mélanges.

Parmi les biocides qui peuvent avantageusement être utilisés dans le cadre de la présente invention, on peut citer, à titre d'exemples non limitatifs, les biocides oxydants et les biocides non-oxydants. Des exemples de biocides non-oxydants comprennent les aldéhydes (par exemple formaldéhyde, glutaraldéhyde, and acroléine), les composés aminés (par exemple les ammoniums quaternaires et les cocodiamines), les composés halogénés (tels que le 2-bromo-2-nitropropane-3-diol (plus connu sous le nom de bronopol) et le 2-2-dibromo-3-nitrilopropionamide (DBNPA)), les composés soufrés (tels que isothiazolone, carbamates, métronidazole), les sels de phosphonium quaternaires (tels que le sulfate de tétrakis(hydroxyméthyl)phosphonium (THPS)). Des exemples de biocides oxydants comprennent l'hypochlorite de sodium, l'acide trichloro-isocyanurique, l'acide dichloroisocyanurique, l'hypochlorite de calcium, l'hypochlorite de lithium, les hydantoïnes chlorées, l'hypobromite de sodium stabilisé, le bromure de sodium activé, les

EP 4 441 164 B1

hydantoïnes bromées, le dioxyde de chlore, l'ozone, et les peroxydes. En règle générale, les biocides qui peuvent être utilisés dans le cadre de la présente invention, sont par exemple ceux décrits dans l'ouvrage « Production Chemicals for the Oil and Gas Industry », Malcolm A. Kelland, CRC Press, 2e édition, (2014), 330-344.

Parmi les inhibiteurs thermodynamiques d'hydrates de gaz, on peut citer à titre d'exemples non limitatifs, le chlorure de sodium, le chlorure de potassium, le chlorure de calcium, le chlorure de magnésium, le bromure de sodium, les saumures à base de formates (telles que le formate de potassium), les polyols (tels que glucose, sucrose, fructose, maltose, lactose, gluconate, monoéthylène glycol, diéthylène glycol, triéthylène glycol, mono-propylène glycol, dipropylène glycol, tripropylène glycol, tétrapropylène glycol, monobutylène glycol, dibutylène glycol, tributylène glycol, glycérol, diglycérol, triglycérol, et les sucres (par exemple sorbitol, mannitol)), le méthanol, le propanol, l'éthanol, les éthers de glycol (tels que le diéthylèneglycol monométhyléther, l'éthylèneglycol monobutyléther), les esters alkyliques et cycliques (tels que le lactate d'éthyle, le lactate de butyle, le benzoate de méthyléthyle).

Les inhibiteurs cinétiques d'hydrates de gaz et anti-agglomérants qui peuvent être utilisés dans le cadre de la présente invention, sont par exemple ceux cités dans « Production Chemicals for the Oil and Gas Industry », Malcolm A. Kelland, CRC Press, 2e édition, (2014), 224-244. Plus précisément, les inhibiteurs cinétiques d'hydrates de gaz et anti-agglomérants peuvent être choisis parmi les polysaccharides (tels que hydroxyéthylcellulose (HEC), carboxyméthylcellulose (CMC), l'amidon et ses dérivés, xanthane), les lactames (tels que polyvinylcaprolactame, polyvinyllactame), les pyrrolidones (telles que polyvinylpyrrolidone de divers poids moléculaires), les tensio-actifs (tels que les sels d'acides gras, les alcools éthoxylés, les alcools propoxylés, les esters de sorbitan, les esters de sorbitan éthoxylés, polyglycérolesters d'acides gras, les alkylglucosides, les alkylpolyglucosides, les alkylsulfates, les alkylsulfonates, les alkylestersulfonates, les alkylsulfonates aromatiques, les alkylbétaïnes, les alkylamidobétaïnes, les dispersants à base d'hydrocarbures (tels que lignosulfonates, iminodisuccinates, polyaspartates), les acides aminés, les protéines.

Selon un aspect tout particulièrement préféré de la présente invention le pH de la composition est compris entre 1 et 14, bornes incluses, de préférence entre 4 et 14, et de préférence encore le pH de la composition est strictement supérieur à 7, par exemple compris entre les valeurs strictement supérieures à 7 et inférieures ou égales à 14.

Le pH peut avantageusement être ajusté dans la gamme de valeur précitée par ajout d'un ou plusieurs modificateurs de pH et/ou composés basiques, comme indiqué ci-dessus.

La composition de l'invention qui est une composition moussante destinée à la récupération assistée d'hydrocarbures, s'est montrée en outre particulièrement efficace pour réduire la corrosion sur l'acier non allié, que ce soit lors du stockage, dans les lignes d'injections et aux points d'injections. Il a en outre été démontré que la composition de l'invention permet de prévenir la corrosion généralisée et plus particulièrement la corrosion par crevasse dite également corrosion caverneuse.

Ainsi, et selon un second aspect, la présente invention concerne l'utilisation d'au moins une composition telle qu'elle vient d'être définie pour la récupération assistée d'hydrocarbures, notamment pétrole et/ou gaz. Plus particulièrement, la présente invention concerne l'utilisation pour la récupération assistée d'hydrocarbures, par injection de ladite au moins une composition dans les puits de production. Plus spécifiquement encore, la présente invention concerne l'utilisation d'au moins une composition telle qu'elle vient d'être définie pour prévenir la formation de corrosion que ce soit la corrosion généralisée, mais plus particulièrement la corrosion par crevasse, dite également corrosion caverneuse, mais aussi pour inhiber la corrosion des aciers, plus particulièrement des aciers non alliés, et notamment la corrosion des équipements destinés à la récupération assistée d'hydrocarbures, tels que le pétrole et/ou le gaz.

La composition utile pour l'utilisation selon la présente invention, peut être utilisée pure, c'est-à-dire sans dilution, ou bien encore diluée dans un ou plusieurs solvants, tels que définis plus haut. Selon un aspect préféré, la composition objet de l'utilisation selon l'invention est utilisée pure (sans dilution) ou bien diluée dans un ou plusieurs solvants en proportions allant de 0,1% à 99,9%, de préférence de 0,5% à 99%, en poids par rapport au poids total de (composition + solvant(s)). Selon un aspect préféré, la composition peut être diluée dans un ou plusieurs solvants en proportions allant de 10% à 70%, de préférence de 10% à 60%, en poids par rapport au poids total de (composition + solvant(s)). Selon un autre aspect préféré, la composition peut être diluée dans un ou plusieurs solvants en proportions allant de 1% à 30%, de préférence de 5% à 20%, en poids par rapport au poids total de (composition + solvant(s)).

Enfin, et selon un troisième aspect, la présente invention concerne un procédé de récupération assistée d'hydrocarbures, notamment pétrole et/ou gaz, mettant en oeuvre au moins une composition telle que définie précédemment. Le procédé de récupération assistée de l'invention comprend au moins une étape d'ajout dans le fluide d'injection d'au moins une composition moussante, telle que définie précédemment, par le biais d'une ligne d'injection (ou ombilical) ou via l'installation d'extraction, par injection de gaz. Le gaz injecté et la composition s'écoulent ensemble dans l'espace annulaire interne entre le tubage et le puits sous la forme d'un mélange à plusieurs phases, jusqu'à atteindre une vanne d'injection de gaz qui injecte le mélange dans le tubage du puits.

La quantité de composition moussante et non corrosive de l'invention est généralement comprise entre 0,001% et 20%, de préférence entre 0,01% et 10%, de préférence entre 0,01% et 5%, en poids, par rapport au poids de phase aqueuse contenue dans les fluides produits que l'on souhaite extraire du sous-sol et entrainer dans les puits de production.

La composition de l'invention peut être injectée via les lignes d'injections ou l'installation d'extraction par injection de gaz (« gas lift » en langue anglaise), en même temps que d'autres additif(s) ou solvant(s), et par exemple en même temps que d'autres additifs, tels que inhibiteurs de corrosion, anti-hydrates etc., ou encore des solvants, comme par exemple le monoéthylène glycol (MEG).

Par exemple, la composition de l'invention peut par exemple être injectée via la même ligne d'injection existante utilisée pour l'injection d'un l'inhibiteur de corrosion.

Les exemples suivants illustrent l'invention sans en limiter toutefois la portée qui est définie par les revendications annexées.

**Exemple 1** :

On prépare, par simple mélange des composants, les compositions suivantes : Composition R (composition de Référence), Compositions A, B et C, selon l'invention et Composition D comparative qui est une composition tensio-active comprenant a) au moins un amphotère (comme les compostions selon l'invention), mais qui ne comporte pas b) de molécule soufrée.

Toutes les compositions testées sont détaillées dans le tableau 1 suivant, où les teneurs de chaque composant sont exprimées en pourcentages massiques.

-- **Tableau 1** --

| Composition | CAPB | Molécule soufrée | Tensio-actifs, solvants |
|---|---|---|---|
| R | 43,00 | - | eau : 57,00 |
| A | 38,00 | ATG : 0,01 | eau : 56,99 |
| B | 19,00 | MBTNa : 0,02 | eau : 31,28 / BuOH : 49,00 DDBMACl : 0,50 / MEG : 0,20 |
| C | 19,00 | TGNa : 0,11 | eau: 31,00 / BuOH : 49,60 ITODETA: 0,19 / TEG : 0,10 |
| D | 89,50 | - | Eau : 9,50 / NaOH : 0,40 / DDBMACl : 0,20 / Amphoram® CP1 : 0,03 / Noramox® C11 : 0,03 / PBTC : 0,16 / MEG : 0,18 |

CAPB = chlorure de coco-amidopropylbétaïne (Stepan)
ATG = acide thioglycolique (Arkema)
MBTNa = 2-mercaptobenzothiazolate de sodium (MLPC International)
TGNa = Thioglycolate de sodium (Bruno Bock)
BuOH = 2-Butoxyethanol (Merck)
DDBMACl = Chlorure de dodécyldiméthylbenzylammonium (BTC 50 de Stepan)
MEG = Monoéthylène glycol (Merck)
ITODETA = Imidazoline TallOil DETA (Arkema)
Amphoram® CP1 = acide N-coco-aminopropionique (Arkema)
Noramox® C11 = amine grasse éthoxylée (Arkema)
PTBC = acide tricarboxylique phosphonobutane (Italmatch)

On évalue les capacités d'inhibition de corrosion par crevasse par immersion d'un coupon de 17 cm² en acier non allié (de référence UNS G10180) dans 100 mL d'une solution moussante à tester (Compositions R, A, B, C et D) en flacon fermé. Le temps d'immersion est de 15 jours à une température de 60°C. Le coupon métallique comporte une zone confinée recouverte d'un ruban en polytétrafluoroéthylène (PTFE), adhérant à la surface.

La corrosion caverneuse est évaluée par observation microscopique. La profondeur de la corrosion, sous le ruban PTFE par rapport à la surface initiale, constitue la profondeur de la crevasse. Les résultats sont présentés dans le tableau 2 ci-dessous.

-- **Tableau 2** --

| Composition | Profondeur de la crevasse (μm) |
|---|---|
| R | 100 |
| A | < 5 |
| B | < 5 |
| C | < 5 |

(suite)

| Composition | Profondeur de la crevasse ($\mu$m) |
|---|---|
| D | 50 |

On constate que les compositions selon l'invention ne produisent pas de corrosion par crevasse, contrairement à la Composition de référence R, mais aussi et surtout, par rapport à la Composition comparative D.

## Exemple 2 : Test de moussage

Un mélange de brut de pétrole, provenant du Golfe Persique et de densité API (https://fr.wikipedia.org/wiki/Densit%C3%A9_API) comprise entre 20 et 30, et d'eau salée dont la composition est détaillée dans le Tableau 3, est préparé dans une bouteille en verre à différents ratio (voir Tableau 4).

Les compositions moussantes B et de référence R sont introduites chacune dans le mélange à 0,15% ou 0,30% respectivement. La bouteille est fermée et le mélange est secoué pendant 1 minute (200 mouvements par minute) sur une table oscillante. 200 g de ce mélange sont ensuite introduits dans une colonne en verre de 1000 mL, avec double enveloppe, préalablement chauffée à la température désirée, soit 60°C, avec un bain thermostaté relié à la double enveloppe.

La colonne comprend une alimentation en dioxyde de carbone ($CO_2$), composée d'un fritté en verre de porosité classe 2, positionné en bas de colonne pour l'écoulement du gaz, un débitmètre. La tête de colonne comprend un condenseur pour transporter le liquide débordant de là, vers un autre récipient posé sur une balance destinée à enregistrer, en fonction du temps, la quantité de liquide récupéré. Le débit de gaz est maintenu constant à 2 L.min$^{-1}$.

-- **Tableau 3** -

| Minéraux* | g.L$^{-1}$ |
|---|---|
| SrCl$_2$, 6 H$_2$O | 0,02 |
| MgCl$_2$, 6 H$_2$O | 23,42 |
| Na$_2$SO$_4$ | 1,35 |
| KBr | 0,32 |
| KCl | 1,44 |
| CaCl$_2$, 2 H$_2$O | 21,94 |
| NaHCO$_3$ | 1,03 |
| NaCl | 57,40 |
| * Ces sels minéraux sont disponibles chez Sigma Aldrich | |

Le pourcentage de liquide récupéré en tête de colonne après 5 min est calculé en divisant le poids du liquide collecté dans le récipient par le poids initial placé dans le cylindre, multiplié par 100. Les résultats sont présentés dans le Tableau 4 suivant :

-- **Tableau** 4 -

| Ratio eau salée / brut de pétrole (v/v) | Composition | Pourcentage de liquide récupéré par moussage après 5 min |
|---|---|---|
| 100/0 | R | 82% |
| 70/30 | R | 61% |
| 100/0 | B | 84% |
| 70/30 | B | 60% |

On constate que les compositions selon l'invention, outre leur aptitude à inhiber la corrosion par crevasse, permettent une récupération assistée du pétrole par entraînement des fluides par moussage, tout comme les compositions communément utilisées qui, cependant, souffrent de l'inconvénient de ne pas inhiber ladite corrosion par crevasse.

**Exemple 3 :**

Cet exemple permet d'évaluer les capacités d'inhibition de corrosion par mesure des vitesses de corrosion avec les Compositions A, B, C, la Composition R (composition de Référence) et la Composition D (composition Comparative), déjà préparées dans l'Exemple 1.

Les capacités d'inhibition de corrosion, sont évaluées par immersion d'un coupon de 17 cm$^2$ en acier non allié (de référence UNS G10180) dans 100 mL d'une solution moussante à tester (Compositions R, A, B, C et D) en flacon fermé. Le temps d'immersion est de 15 jours à une température de 60°C. Le coupon métallique comporte une zone confinée recouverte d'un ruban en polytétrafluoroéthylène (PTFE), adhérant à la surface. Chaque coupon est pesé avant immersion.

La corrosion généralisée est évaluée par la mesure de perte de masse du coupon par pesée avant et après la durée de 15 jours d'immersion à 60°C.

La vitesse de corrosion, notée « *v* », exprimée en mm/an, et est calculée selon la formule suivante :

$$v = \frac{\Delta poids \ \times 24 \ \times 365}{Masse \ volumique \ \times aire \ de \ l'échantillon \times durée \ du \ test \times 10}$$

dans laquelle :

*Δpoids* représente la différence (masse initiale - masse finale), exprimée en g, du coupon métallique après le test d'immersion,

*Masse volumique* représente la masse volumique (en g cm$^{-3}$) de l'échantillon testé, soit 7,89 g cm$^{-3}$,

*aire de l'échantillon* représente l'aire de l'échantillon en cm$^2$, et

*durée du test* représente la durée du test exprimée en heures.

Les résultats sont présentés dans le Tableau 5 ci-dessous :

-- **Tableau 5** --

| *Composition* | *v (mm/an)* |
|---|---|
| R | 0,280 |
| A | 0,094 |
| B | 0,036 |
| C | 0,030 |
| D | 0,097 |

On constate que les compositions selon l'invention permettent de réduire la vitesse de corrosion par rapport à la composition R de référence.

**Revendications**

**1.** Composition moussante, inhibitrice de corrosion, comprenant :

a) une composition tensio-active comprenant au moins un composé tensio-actif amphotère et éventuellement un ou plusieurs composés tensioactifs additionnels choisis parmi les composés tensioactifs ioniques et non-ioniques, et

b) au moins une molécule soufrée choisie parmi :

- l'acide thioglycolique, le thioglycolate de sodium, le thiosulfate de sodium, le thiocyanate de sodium, l'acide mercaptopropionique, le *tert*-butylmercaptan, le thioglycolate d'éthylhexyle, les disulfures d'acide thioglycolique, l'acide 3-mercaptopropionique et ses sels, le 1,8-dimercapto-3,6-di-oxa-octane, le bis-(2-mercaptoéthyl)éther, les mercaptobenzothiazolates, le sel de sodium de l'acide 2-[(di-thiocarboxy)thio]-acétique, le thiosulfite d'ammonium, le thiosulfate d'ammonium, le thiosulfate de potassium, le thiosulfite de potassium, le thiocyanate d'ammonium, le thiocyanate de calcium, le thioglycolate d'ammonium, la 1,2-diéthylthio-urée, la propylthio-urée, la 1,1-diphénylthio-urée, le thiocarbanilide, la 1,2-dibutylthio-urée, le thioacétamide de dithio-urée, le thionicotimide, le thiobenzamide, le 2-mercapto-éthanol, le 3-(méthylthio) propanal, l'acide thioacétique, la cystéamine, le 3-chloro-1-pro-panethiol, le 1-mercapto-2-propanol, le 2-méthoxyéthane-thiol, le 3-mercapto-1-propanol, le 2,3-dimercapto-1-propanol, le 1-thioglycérol, le 1,3-propane-dithiol, l'acide mercaptosuccinique, la N-carbamoyl-L-cystéine, la N-acétylcystéamine, le 4-mercapto-1-butanol, le 1-butanedithiol, le 1,4-butanedithiol, le 2,2'-thiodiéthanethiol, le 4-cyano-1-butanethiol, le cyclopentanethiol, le 1,5-pentanedithiol, le 2-méthyl-1-butanethiol, le 2,3,5,6-tétrafluorobenzènethiophénol, le 4-chlorothiophénol, le 2-mercaptophénol, le thiophénol, le cyclohexylthiol, l'acide 4-mercaptobenzoïque, l'acide thiosalicylique, le 2-éthylhexanethiol, les composés de formule $C_nH_{2n+1}SH$, avec n compris entre 1 et 10, bornes incluses,
- ainsi que les mélanges de deux ou plusieurs desdites molécules soufrées en toutes proportions.

2. Composition selon la revendication 1, dans laquelle le composé tensio-actif amphotère est un zwitterion, de préférence choisi parmi les bétaïnes et les sultaïnes.

3. Composition selon la revendication 1 ou la revendication 2, dans laquelle le composé tensio-actif amphotère est choisi dans le groupe des bétaïnes et des sultaïnes comprenant les alkylbétaïnes, les alkylarylbétaïnes, les arylalkylbétaïnes, les alkylamidopropylbétaïnes, les alkylarylamidopropylbétaïnes, les arylalkylamidopropylbétaïnes, les alkylaminopropylbétaïnes, les alkylarylaminopropylbétaïnes, les arylalkylaminopropylbétaïnes, les alkylsultaïnes, les alkylarylsultaïnes, les arylalkylsultaïnes, les alkylamidopropylhydroxysultaïnes, ainsi que les mélanges de deux ou plusieurs d'entre elles en toutes proportions.

4. Composition selon l'une quelconque des revendications précédentes, dans laquelle le tensio-actif additionnel est choisi parmi les alkyl(aryl)(éther)sulfates, les alkyl(aryl)sulfonates, les alkyl(aryl)ester phosphates, les alkyl(aryl) carboxylates, les alkylsulfosuccinates, les sels d'ammonium quaternaires, les oxydes d'alkylamines, les éthoxylats d'alkylamines, les éthoxylats d'alkylamides, les éthoxylats d'acides gras, les éthoxylats d'alcools gras, les alkyléthercarboxylates, les carboxylates d'alkylamides, les alkyl(poly)glucosides, les esters d'alkylsorbitan, les copolymères à blocs éthylèneoxy-propylèneoxy (EO-PO), les alkylisothionates, les alkylglycinates, les alkylsarcosinates, les alkylsulfosuccinates, les alkylglutamates, les alkyllactilates, les alkyltaurates, les alkylsulfoacétates, ainsi que les mélanges de deux ou plusieurs d'entre eux en toutes proportions.

5. Composition selon l'une quelconque des revendications précédentes, dans laquelle la molécule soufrée est présente à une dose comprise entre 0,001% et 2%, de préférence 0,005% et 1%, de préférence encore 0,005% à 0,1%, et avantageusement 0,005% et 0,01%, bornes incluses, en poids, par rapport au poids total de la composition.

6. Composition selon l'une quelconque des revendications précédentes, comprenant en outre au moins un solvant, de préférence un solvant polaire, ou un solvant non polaire ou une combinaison de ceux-ci, de préférence choisis parmi :

- l'eau, y compris l'eau salée, l'eau de mer,
- les alcools, incluant les alcools de formule R-OH, où R est tel que défini précédemment, et tels que le méthanol, l'éthanol, le propanol, l'isopropanol, le butanol, le 2-éthoxyéthanol, l'hexanol, l'octanol, 2-butoxyéthanol,
- les glycols, les éthers de glycol et leurs dérivés, tels que l'éthylèneglycol, le diéthylèneglycol, le triéthylèneglycol, le 1,2-propylèneglycol, le 1,3-propylèneglycol, l'éthylèneglycol-monobutyléether, et autres,
- les cétones, telles que la cyclohexanone, les di-isobutylcétones, la N-méthylpyrrolidinone, le N,N-diméthylformamide, et autres,

ainsi que le mélange de deux ou plusieurs d'entre eux en toutes proportions.

7. Composition selon l'une quelconque des revendications précédentes, comprenant en outre un ou plusieurs autres additifs, de préférence choisis parmi :

- les modificateurs de pH,
- les anti-dépôts minéraux,
- les inhibiteurs de corrosions,
- les inhibiteurs de sulfure d'hydrogène,
- les pièges à oxygène,
- les désémulsionnants,
- les anti-asphaltènes,

- les anti-paraffines,
- les déshuilants,
- les réducteurs de point d'écoulement,
- les biocides,
- les anti-agglomérants d'hydrates de gaz,
- les inhibiteurs thermodynamiques d'hydrates de gaz,
- les inhibiteurs cinétiques d'hydrates de gaz,
- ainsi que les mélanges de deux ou plusieurs de ces additifs en toutes proportions.

8. Utilisation d'au moins une composition selon l'une quelconque des revendications 1 à 7, pour la récupération assistée d'hydrocarbures, notamment pétrole et/ou gaz.

9. Utilisation selon la revendication 8, pour prévenir la formation de corrosion généralisée, et plus particulièrement pour prévenir la corrosion par crevasse.

10. Procédé de récupération assistée d'hydrocarbures, comprenant au moins une étape d'ajout dans le fluide d'injection d'au moins une composition selon l'une quelconque des revendications 1 à 7, par le biais d'une ligne d'injection ou via l'installation d'extraction, par injection de gaz.

**Patentansprüche**

1. Korrosionsinhibierende schäumende Zusammensetzung, umfassend:

   a) eine Tensidzusammensetzung, die mindestens eine amphotere Tensidverbindung und gegebenenfalls eine oder mehrere zusätzliche Tensidverbindungen, die aus ionischen und nichtionischen Tensidverbindungen ausgewählt sind, umfasst, und
   b) mindestens ein schwefelhaltiges Molekül, ausgewählt aus:

   - Thioglykolsäure, Natriumthioglykolat, Natriumthiosulfat, Natriumthiocyanat, Mercaptopropionsäure, tert-Butylmercaptan, Ethylhexylthioglykolat, Thioglykolsäuredisulfiden, 3-Mercaptopropionsäure und Salzen davon, 1,8-Dimercapto-3,6-dioxaoctan, Bis(2-mercaptoethyl)ether, Mercaptobenzothiazolaten, dem Natriumsalz von 2-[(Dithiocarboxy)thio]essigsäure, Ammoniumthiosulfit, Ammoniumthiosulfat, Kaliumthiosulfat, Kaliumthiosulfit, Ammoniumthiocyanat, Calciumthiocyanat, Ammoniumthioglykolat, 1,2-Diethylthioharnstoff, Propylthioharnstoff, 1,1-Diphenylthioharnstoff, Thiocarbanilid, 1,2-Dibutylthioharnstoff, Dithioharnstoffthioacetamid, Thionicotimid, Thiobenzamid, 2-Mercaptoethanol, 3-(Methylthio)propanal, Thioessigsäure, Cysteamin, 3-Chlor-1-propanthiol, 1-Mercapto-2-propanol, 2-Methoxyethanthiol, 3-Mercapto-1-propanol, 2,3-Dimercapto-1-propanol, 1-Thioglycerin, 1,3-Propandithiol, Mercaptobernsteinsäure, la N-Carbamoyl-L-cystein, N-Acetylcysteamin, 4-Mercapto-1-butanol, 1-Butandithiol, 1,4-Butandithiol, 2,2'-Thiodiethanthiol, 4-Cyano-1-butanthiol, Cyclopentanthiol, 1,5-Pentandithiol, 2-Methyl-1-butanthiol, 2,3,5,6-Tetrafluorbenzolthiophenol, 4-Chlorthiophenol, 2-Mercaptophenol, Thiophenol, Cyclohexylthiol, 4-Mercaptobenzoesäure, Thiosalicylsäure, 2-Ethylhexanthiol, Verbindungen der Formel $C_nH_{2n+1}SH$, wobei n zwischen 1 und 10 liegt, Grenzen eingeschlossen,
   - sowie Mischungen von zwei oder mehr dieser schwefelhaltigen Moleküle in beliebigen Anteilen.

2. Zusammensetzung nach Anspruch 1, wobei es sich bei der amphoteren Tensidverbindung um ein Zwitterion handelt, das vorzugsweise aus Betainen und Sultainen ausgewählt ist.

3. Zusammensetzung nach Anspruch 1 oder Anspruch 2, wobei die amphotere Tensidverbindung aus der Gruppe der Betaine und Sultaine, die Alkylbetaine, Alkylarylbetaine, Arylalkylbetaine, Alkylamidopropylbetaine, Alkylarylamidopropylbetaine, Arylalkylamidopropylbetaine, Alkylaminopropylbetaine, Alkylarylaminopropylbetaine, Arylalkylaminopropylbetaine, Alkylsultaine, Alkylarylsultaine, Arylalkylsultaine, Alkylamidopropylhydroxysultaine sowie Mischungen von zwei oder mehr davon in beliebigen Anteilen umfasst, ausgewählt ist.

4. Zusammensetzung nach einem der vorhergehenden Ansprüche, wobei das zusätzliche Tensid aus Alkyl(aryl)(ether)sulfaten, Alkyl(aryl)sulfonaten, Alkyl(aryl)esterphosphaten, Alkyl(aryl)carboxylaten, Alkylsulfosuccinaten, quartären Ammoniumsalzen, Alkylaminoxiden, Alkylaminethoxylaten, Alkylamidethoxylaten, Fettsäureethoxylaten, Fettalkholethoxylaten, Alkylethercarboxylaten, Alkylamidcarboxylaten, Alkyl(poly)glucosiden, Alkylsorbitanestern, Ethylenoxy-Propylenoxy(EO-PO)-Blockcopolymeren, Alkylisothionaten, Alkylglycinaten, Alkylsarcosinaten, Alkylsulfosuccinaten, Alkylglutamaten, Alkyllactylaten, Alkyltauraten, Alkylsulfoacetaten sowie Mischungen von zwei oder mehr davon in beliebigen Anteilen ausgewählt ist.

5. Zusammensetzung nach einem der vorhergehenden Ansprüche, bei der das schwefelhaltige Molekül in einer Dosis zwischen 0,001 und 2 Gew.-%, vorzugsweise 0,005 und 1 Gew.-%, weiter bevorzugt 0,005 bis 0,1 Gew.-% und vorteilhafterweise 0,005 und 0,01 Gew.-%, Grenzen eingeschlossen, bezogen auf das Gesamtgewicht der Zusammensetzung, vorliegt.

6. Zusammensetzung nach einem der vorhergehenden Ansprüche, außerdem umfassend mindestens ein Lösungsmittel, vorzugsweise ein polares Lösungsmittel, oder ein unpolares Lösungsmittel oder eine Kombination davon, vorzugsweise ausgewählt aus:

- Wasser einschließlich Salzwasser, Meerwasser,
- Alkoholen einschließlich Alkoholen der Formel R-OH, wobei R wie oben definiert ist, und wie Methanol, Ethanol, Propanol, Isopropanol, Butanol, 2-Ethoxyethanol, Hexanol, Octanol, 2-Butoxyethanol,
- Glykolen, Glykolethern und Derivaten davon, wie Ethylenglykol, Diethylenglykol, Triethylenglykol, 1,2-Propylenglykol, 1,3-Propylenglykol, Ethylenglykolmonobutylether und anderen,
- Ketonen wie Cyclohexanon, Diisobutylketonen, N-Methylpyrrolidinon, N,N-Dimethylformamid und anderen,

sowie Mischungen von zwei oder mehr davon in beliebigen Anteilen.

7. Zusammensetzung nach einem der vorhergehenden Ansprüche, außerdem umfassend ein oder mehrere andere Additive, vorzugsweise ausgewählt aus:

- pH-Modifikatoren,
- Mineralablagerungsinhibitoren,
- Korrosionsinhibitoren,
- Schwefelwasserstoffinhibitoren,
- Sauerstofffänger,
- Demulgatoren,
- Antiasphaltenen,
- Antiparaffinen,
- Entölern,
- Stockpunkterniedrigern,
- Bioziden,
- Gashydrat-Antiagglomerationsmitteln,
- thermodynamischen Gashydratinhibitoren,
- kinetischen Gashydratinhibitoren,
- sowie Mischungen von zwei oder mehr dieser Additive in beliebigen Anteilen.

8. Verwendung mindestens einer Zusammensetzung nach einem der Ansprüche 1 bis 7 zur tertiären Gewinnung von Kohlenwasserstoffen, insbesondere Öl und/oder Gas.

9. Verwendung nach Anspruch 8 zur Verhinderung der Bildung von allgemeiner Korrosion und insbesondere zur Verhinderung von Spaltkorrosion.

10. Verfahren zur tertiären Gewinnung von Kohlenwasserstoffen, umfassend mindestens einen Schritt der Zugabe von mindestens einer Zusammensetzung nach einem der Ansprüche 1 bis 7 zum Injektionsfluid über eine Einspritzleitung oder über die Extraktionsanlage durch Gasinjektion.

**Claims**

1. Foaming, corrosion-inhibiting composition, comprising:

a) a surfactant composition comprising at least one amphoteric surfactant compound and optionally one or more additional surfactant compounds selected from ionic and nonionic surfactant compounds, and

b) at least one sulfur-containing molecule selected from:

- thioglycolic acid, sodium thioglycolate, sodium thiosulfate, sodium thiocyanate, mercaptopropionic acid, tert-butyl mercaptan, ethylhexyl thioglycolate, thioglycolic acid disulfides, 3-mercaptopropionic acid and salts thereof, 1,8-dimercapto-3,6-dioxaoctane, bis(2-mercaptoethyl) ether, mercaptobenzothiazolates, the sodium salt of 2-[(dithiocarboxy)thio]acetic acid, ammonium thiosulfite, ammonium thiosulfate, potassium thiosulfate, potassium thiosulfite, ammonium thiocyanate, calcium thiocyanate, ammonium thioglycolate, 1,2-diethylthiourea, propylthiourea, 1,1-diphenylthiourea, thiocarbanilide, 1,2-dibutylthiourea, dithiourea thioacetamide, thionicotimide, thiobenzamide, 2-mercaptoethanol, 3-(methylthio)propanal, thioacetic acid, cysteamine, 3-chloro-1-propanethiol, 1-mercapto-2-propanol, 2-methoxyethanethiol, 3-mercapto-1-propanol, 2,3-dimercapto-1-propanol, 1-thioglycerol, 1,3-propanedithiol, mercaptosuccinic acid, N-carbamoyl-L-cysteine, N-acetylcysteamine, 4-mercapto-1-butanol, 1-butanedithiol, 1,4-butanedithiol, 2,2'-thiodiethanethiol, 4-cyano-1-butanethiol, cyclopentanethiol, 1,5-pentanedithiol, 2-methyl-1-butanethiol, 2,3,5,6-tetrafluorobenzenethiophenol, 4-chlorothiophenol, 2-mercaptophenol, thiophenol, cyclohexylthiol, 4-mercaptobenzoic acid, thiosalicylic acid, 2-ethylhexanethiol, compounds of formula $C_nH_{2n+1}SH$, where n is between 1 and 10, limits inclusive,
- and also mixtures of two or more of said sulfur-containing molecules in any proportions.

2. Composition according to Claim 1, wherein the amphoteric surfactant compound is a zwitterion, preferably selected from betaines and sultaines.

3. Composition according to Claim 1 or Claim 2, wherein the amphoteric surfactant compound is selected from the group of betaines and sultaines, comprising alkylbetaines, alkylarylbetaines, arylalkylbetaines, alkylamidopropylbetaines, alkylarylamidopropylbetaines, arylalkylamidopropylbetaines, alkylaminopropylbetaines, alkylarylaminopropylbetaines, arylalkylaminopropylbetaines, alkylsultaines, alkylarylsultaines, arylalkylsultaines, alkylamidopropylhydroxysultaines, and also mixtures of two or more of these in any proportions.

4. Composition according to any one of the preceding claims, wherein the additional surfactant is selected from alkyl(aryl) (ether) sulfates, alkyl(aryl)sulfonates, alkyl(aryl) ester phosphates, alkyl(aryl) carboxylates, alkyl sulfosuccinates, quaternary ammonium salts, alkylamine oxides, alkylamine ethoxylates, alkylamide ethoxylates, fatty acid ethoxylates, fatty alcohol ethoxylates, alkyl ether carboxylates, alkylamide carboxylates, alkyl (poly)glucosides, alkylsorbitan esters, copolymers comprising ethyleneoxy-propyleneoxy (EO-PO) blocks, alkyl isethionates, alkyl glycinates, alkyl sarcosinates, alkyl sulfosuccinates, alkyl glutamates, alkyl lactylates, alkyl taurates, alkyl sulfoacetates, and also mixtures of two or more of these in any proportions.

5. Composition according to any one of the preceding claims, wherein the sulfur-containing molecule is present in a dose of between 0.001% and 2%, preferably 0.005% and 1%, more preferably 0.005% to 0.1%, and advantageously 0.005% and 0.01%, limits inclusive, by weight, relative to the total weight of the composition.

6. Composition according to any one of the preceding claims, additionally comprising at least one solvent, preferably a polar solvent, or a non-polar solvent, or a combination thereof, preferably selected from:

- water, including salt water, sea water,
- alcohols, including alcohols of formula R-OH, where R is as defined above, and such as methanol, ethanol, propanol, isopropanol, butanol, 2-ethoxyethanol, hexanol, octanol, 2-butoxyethanol,
- glycols, glycol ethers and derivatives thereof, such as ethylene glycol, diethylene glycol, triethylene glycol, 1,2-propylene glycol, 1,3-propylene glycol, ethylene glycol monobutyl ether, and others,
- ketones, such as cyclohexanone, diisobutyl ketones, N-methylpyrrolidinone, N,N-dimethylformamide, and others,

and also mixtures of two or more of these in any proportions.

7. Composition according to any one of the preceding claims, additionally comprising one or more other additives, preferably selected from:

- pH modifiers,
- mineral deposit inhibitors,
- corrosion inhibitors,

- hydrogen sulfide inhibitors,
- oxygen scavengers,
- demulsifiers,
- anti-asphaltene agents,
- anti-paraffin agents,
- deoilers,
- pour point depressants,
- biocides,
- gas hydrate antiagglomerants,
- thermodynamic gas hydrate inhibitors,
- kinetic gas hydrate inhibitors,
- and also mixtures of two or more of these additives in any proportions.

8. Use of at least one composition according to any one of Claims 1 to 7, for the enhanced recovery of hydrocarbons, especially oil and/or gas.

9. Use according to Claim 8, for preventing generalized corrosion formation, and more particularly for preventing crevice corrosion.

10. Process for the enhanced recovery of hydrocarbons, comprising at least one step of adding to the injection fluid at least one composition according to any one of Claims 1 to 7, by means of an injection line or via the installation for extraction, by gas lift.

## RÉFÉRENCES CITÉES DANS LA DESCRIPTION

**Documents brevets cités dans la description**

- US 7422064 B
- US 7823647 B
- US 8551925 B
- EP 3103852 A
- CN 111057530
- CN 110878201
- US 20150322757 A
- US 11168244 B
- US 2019010381 A

**Littérature non-brevet citée dans la description**

- *CHEMICAL ABSTRACTS*, 86932-91-4
- **MALCOLM A. KELLAND**. Production Chemicals for the Oil and Gas Industry. CRC Press, 2014, 194-212
- **MALCOLM A. KELLAND**. Production Chemicals for the Oil and Gas Industry. CRC Press, 2014, 369-373
- **MALCOLM A. KELLAND**. Production Chemicals for the Oil and Gas Industry. CRC Press, 2014, 291-301
- **MALCOLM A. KELLAND**. Production Chemicals for the Oil and Gas Industry. CRC Press, 2014, 267-278
- **MALCOLM A. KELLAND**. Production Chemicals for the Oil and Gas Industry. CRC Press, 2014, 330-344
- **MALCOLM A. KELLAND**. Production Chemicals for the Oil and Gas Industry. CRC Press, 2014, 224-244